# EUROPEAN PATENT SPECIFICATION

(11) **EP 4 318 727 B1**
(45) Date of publication and mention of the grant of the patent: **21.10.2026**
(21) Application number: 21935132.7
(22) Date of filing: 15.11.2021
(51) Int. Cl.: H01M 10/36, H01M 10/052, H01M 10/0568, H01M 50/42, H01M 50/426, H01M 50/449, H01M 10/0564

(54) **LITHIUM ION SECONDARY BATTERY**
LITHIUMIONEN-SEKUNDÄRBATTERIE
BATTERIE SECONDAIRE AU LITHIUM-ION

(30) Priority: 30.03.2021 JP 2021058545
(43) Date of publication of application: 07.02.2024
(73) Proprietor: Panasonic Intellectual Property Management Co., Ltd., Osaka-shi, Osaka 540-6207 (JP)
(72) Inventor: IIDA Kazuhiro, Kadoma-shi, Osaka 571-0057 (JP); TAKEZAWA Hideharu, Kadoma-shi, Osaka 571-0057 (JP)
(74) Representative: Novagraaf International SA
(86) International application number: PCT/JP2021/041878
(87) International publication number: WO 2022/208978

(56) References cited:
- WO-A1-2011/089710
- JP-A- 2012 028 017
- JP-A- 2018 022 655
- JP-A- 2019 046 687
- JP-A- 2019 160 734
- JP-A- 2020 149 930
- JP-A- 2020 198 289
- US-A1- 2012 276 457
- US-A1- 2019 221 879

## Description

### TECHNICAL FIELD

The present disclosure relates to a lithium ion secondary battery.

### BACKGROUND

As secondary batteries with a high output and a high energy density, lithium ion secondary batteries are widely used that include a positive electrode, a negative electrode, and an electrolyte liquid and perform charge and discharge by allowing lithium ions to travel between the positive electrode and the negative electrode. In the conventional secondary batteries, an organic solvent-based electrolyte liquid is used for achieving the high energy density.

However, organic solvents are generally flammable, and have an important problem of ensuring safety. In addition, organic solvents have a lower ion conductivity than aqueous solutions, and have a problem that the rapid charge-discharge characteristics are insufficient.

In view of such problems, a secondary battery has been studied in which an aqueous electrolyte containing water is used (see, for example, Patent Literature 1 to 4). For example, Patent Literature 1 proposes a lithium ion secondary battery in which an aqueous solution containing a high-concentration alkali salt is used as an aqueous liquid electrolyte. Patent Literature 2 proposes a lithium ion secondary battery including a negative electrode filled with a non-aqueous solid electrolyte, a positive electrode, a separator disposed between the negative electrode and the positive electrode and filled with a non-aqueous solid electrolyte, and an aqueous liquid electrolyte. Patent Literature 5 and Patent Literature 6 disclose further lithium ion secondary batteries.

Non Patent Literature 1 discloses a method of producing a non-porous membrane of a solid electrolyte with a phase inversion method using a poor solvent.

### CITATION LIST

### PATENT LITERATURE

Patent Literature 1: JP 6423453 B
Patent Literature 2: JP 2018-198131 A
Patent Literature 3: JP 2018-156895 A
Patent Literature 4: JP 2018-156837 A
Patent Literature 5: US 2019/221879 A1
Patent Literature 6: US 2012/276457 A1

### NON PATENT LITERATURE

Non Patent Literature 1: Electrochimica Acta 49, (2004), 3339-3345

### SUMMARY

### TECHNICAL PROBLEM

Conventional lithium ion secondary batteries including an aqueous electrolyte have a problem of capacity reduction associated with a charge-discharge cycle.

Therefore, an object of the present disclosure is to provide a lithium ion secondary battery in which capacity reduction associated with a charge-discharge cycle can be suppressed while an aqueous electrolyte is used.

### SOLUTION TO PROBLEM

An aspect of the present disclosure is a lithium ion secondary battery including a negative electrode, a positive electrode, a non-aqueous electrolyte including a lithium salt, an aqueous electrolyte including a lithium salt, and a partition layer disposed between the negative electrode and the positive electrode, and the aqueous electrolyte is in contact with only the positive electrode between the negative electrode and the positive electrode, the non-aqueous electrolyte is in contact with at least the negative electrode between the negative electrode and the positive electrode, the partition layer includes a non-aqueous solid electrolyte A in which a matrix polymer and a non-aqueous electrolyte liquid are combined, and the matrix polymer includes a copolymer of acrylonitrile and at least one of methyl methacrylate, methyl acrylate, or vinyl acetate.

### ADVANTAGEOUS EFFECTS OF INVENTION

The invention is set out in the appended claims. According to the present disclosure, a lithium ion secondary battery can be provided in which capacity reduction associated with a charge-discharge cycle can be suppressed.

### BRIEF DESCRIPTION OF DRAWING

FIG. 1 is a schematic sectional view showing an example of a lithium ion secondary battery of the present embodiment.
FIG. 2 is a schematic sectional view showing another example of the lithium ion secondary battery of the present embodiment.

### DESCRIPTION OF EMBODIMENTS

A lithium ion secondary battery as an aspect of the present disclosure includes a negative electrode, a positive electrode, a non-aqueous electrolyte including a lithium salt, an aqueous electrolyte including a lithium salt, and a partition layer disposed between the negative electrode and the positive electrode, and the aqueous electrolyte is in contact with only the positive electrode between the negative electrode and the positive electrode, the non-aqueous electrolyte is in contact with at least the negative electrode between the negative electrode and the positive electrode, the partition layer includes a non-aqueous solid electrolyte A in which a matrix polymer and a non-aqueous electrolyte liquid are combined, and the matrix polymer includes a copolymer of acrylonitrile and at least one of methyl methacrylate, methyl acrylate, or vinyl acetate. Using the lithium ion secondary battery of an aspect of the present disclosure can suppress capacity reduction associated with a charge-discharge cycle. Although the mechanism of exerting the effect is not sufficiently clear, the following is presumed.

Bringing the aqueous electrolyte into contact with only the positive electrode suppresses a side reaction of water at the negative electrode and thus a charge-discharge reaction can proceed. However, if moisture in the aqueous electrolyte on the positive electrode side moves to the negative electrode side through the partition layer between the positive electrode and the negative electrode over time, a side reaction of water occurs, and thus capacity reduction associated with a charge-discharge cycle is likely to occur. However, the movement of moisture in the aqueous electrolyte on the positive electrode side to the negative electrode side is suppressed by using the partition layer, as in the present disclosure, including the non-aqueous solid electrolyte A in which the matrix polymer and the non-aqueous electrolyte liquid are combined and the matrix polymer includes a copolymer of acrylonitrile and at least one of methyl methacrylate, methyl acrylate, or vinyl acetate, and thus a side reaction of water is suppressed, so that capacity reduction associated with a charge-discharge cycle is suppressed.

Hereinafter, an example of an embodiment of the lithium ion secondary battery according to the present disclosure will be described in detail.

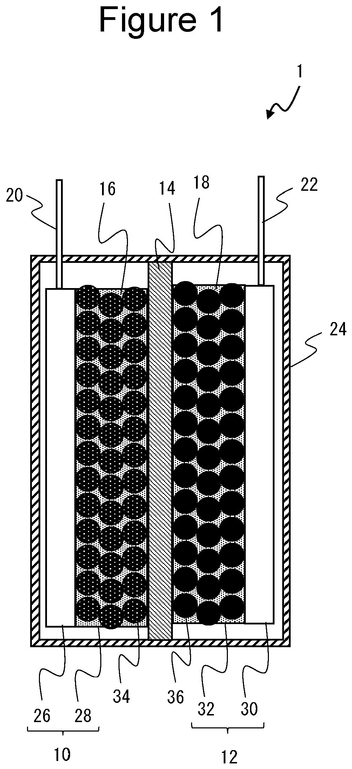

FIG. 1 is a schematic sectional view showing an example of the lithium ion secondary battery of the present embodiment. A lithium ion secondary battery 1 shown in FIG. 1 includes a positive electrode 10, a negative electrode 12, a partition layer 14, an aqueous electrolyte 16, a non-aqueous electrolyte 18, a positive electrode lead 20, a negative electrode lead 22, and a battery case 24 housing these components.

The positive electrode 10 includes a positive electrode current collector 26 and a positive electrode mixture layer 28 disposed on the positive electrode current collector 26. A positive electrode lead 20 is connected to the positive electrode current collector 26. The positive electrode lead 20 is housed in the battery case 24 so that the tip of the positive electrode lead 20 protrudes to the outside of the battery case 24.

The negative electrode 12 includes a negative electrode current collector 30 and a negative electrode mixture layer 32 disposed on the negative electrode current collector 30. A negative electrode lead 22 is connected to the negative electrode current collector 30. The negative electrode lead 22 is housed in the battery case 24 so that the tip of the negative electrode lead 22 protrudes to the outside of the battery case 24.

For example, the positive electrode mixture layer 28 is impregnated with the aqueous electrolyte 16, and the aqueous electrolyte 16 is in contact with only the positive electrode 10 between the positive electrode 10 and the negative electrode 12. For example, the negative electrode mixture layer 32 is impregnated with the non-aqueous electrolyte 18, and the non-aqueous electrolyte 18 is in contact with the negative electrode 12. The non-aqueous electrolyte 18 may be in contact with only the negative electrode 12 between the positive electrode 10 and the negative electrode 12, or in contact with both the positive electrode 10 and the negative electrode 12. The partition layer 14 is disposed between the positive electrode 11 and the negative electrode 12. The partition layer 14 may be wound around the negative electrode 12.

<Positive Electrode 10>

As the positive electrode current collector 26, for example, a foil of a metal electrochemically and chemically stable within the potential range of the positive electrode 10 or a film having such a metal disposed on its surface layer can be used. The form of the positive electrode current collector 26 is not particularly limited. For example, a porous body of the metal, such as a mesh, a punching sheet, or an expanded metal, may be used. Examples of a material of the positive electrode current collector 26 include stainless steel, Al, an aluminum alloy, and Ti. The positive electrode current collector 26 preferably has a thickness of, for example, greater than or equal to 3 µm and less than or equal to 50 µm from the viewpoints of current collectability, mechanical strength, and the like.

The positive electrode mixture layer 28 includes a positive electrode active material. The positive electrode mixture layer 28 may include a binder, a conductive agent, and the like. The positive electrode 10 can be manufactured by, for example, applying a positive electrode mixture slurry including a positive electrode active material, a binder, a conductive agent, and the like to the positive electrode current collector 26, and drying and rolling the applied film to form a positive electrode mixture layer 28 on the positive electrode current collector 26.

Examples of the positive electrode active material include lithium-containing transition metal oxides containing lithium (Li) and a transition metal element such as cobalt (Co), manganese (Mn), or nickel (Ni). In addition, examples of the positive electrode active material include transition metal sulfides, metal oxides, lithium-containing polyanion-based compounds containing one or more transition metals such as lithium iron phosphate (LiFePO₄) and lithium iron pyrophosphate (Li₂FeP₂O₇), a sulfur-based compound (Li₂S), oxygen, and oxygen-containing metal salts such as lithium oxide. As the positive electrode active material, a lithium-containing transition metal oxide is preferable, for example, from the viewpoint of charge-discharge efficiency.

The lithium-containing transition metal oxide preferably contains at least one element of Ni, Co, Mn, or aluminum (Al), for example, from the viewpoints of charge-discharge efficiency and the like. Among these elements, at least a Ni element, at least a Co element, at least two elements of Ni and Mn, at least three elements of Ni, Co, and Mn, or at least three elements of Ni, Co, and Al are preferably contained. The lithium-containing transition metal oxide may contain an additional element other than these elements, and for example, may contain zirconium (Zr), boron (B), magnesium (Mg), scandium (Sc), yttrium (Y), titanium (Ti), iron (Fe), copper (Cu), zinc (Zn), chromium (Cr), lead (Pb), tin (Sn), sodium (Na), potassium (K), barium (Ba), strontium (Sr), calcium (Ca), tungsten (W), molybdenum (Mo), niobium (Nb), and silicon (Si).

Specific examples of the lithium-containing transition metal oxide include LiₓCoO₂, LiₓNiO₂, LiₓMnO₂, LiₓCo_{y}Ni_{1-y}O₂, LiₓCo_{y}M_{1-y}O_{z}, LiₓNi_{1-y}M_{y}O_{z}, LiₓMn₂O₄, LiₓMn_{2-y}M_{y}O₄, LiMPO₄, and Li₂MPO₄F (in each chemical formula, M is at least one of Na, Mg, Sc, Y, Mn, Fe, Co, Ni, Cu, Zn, Al, Cr, Pb, Sb, or B, 0 < x ≤ 1.2, 0 < y ≤ 0.9, and 2.0 ≤ z ≤ 2.3). The lithium-containing transition metal oxides may be used singly or in combination of two or more kinds thereof. The lithium-containing transition metal oxide preferably contains 80 mol% or more of Ni based on the total amount of the transition metals other than lithium from the viewpoint of increasing the capacity. From the viewpoint of stability of the crystal structure, the lithium-containing transition metal oxide is more preferably LiₐNi_{b}Co_{c}Al_{d}O₂ (0 < a ≤ 1.2, 0.8 ≤ b < 1, 0 < c < 0.2, 0 < d ≤ 0.1, and b + c + d = 1).

The lithium-containing transition metal oxide may be a Li-rich transition metal oxide, a lithium-containing transition metal halogen oxide, or the like. The Li-rich transition metal oxide is represented by, for example, the general formula Li₁₊ₓMe₁₋ₓO₂ (0 < x). The lithium-containing transition metal halogen oxide is not particularly limited as long as it is a lithium-containing transition metal oxide containing a halogen atom, but a lithium-containing transition metal oxide containing a fluorine atom is preferably included, for example, from the viewpoints of structural stability of the lithium-containing transition metal oxide, and the like.

As the conductive agent, a known conductive agent can be used that enhances the electroconductivity of the positive electrode mixture layer 28, and examples of the conductive agent include carbon materials such as carbon black, acetylene black, Ketjenblack, graphite, carbon nanofibers, carbon nanotubes, and graphene. As the binder, a known binder can be used that maintains good contact states of the positive electrode active material and the conductive agent and enhances the adhesiveness of the positive electrode active material and the like to the surface of the positive electrode current collector 26, and examples of the binder include fluororesins such as polytetrafluoroethylene (PTFE) and polyvinylidene fluoride (PVDF), polyacrylonitrile (PAN), polyimides, acrylic resins, polyolefins, carboxymethyl celluloses (CMCs) and salts thereof, styrene-butadiene rubber (SBR), polyethylene oxide (PEO), polyvinyl alcohol (PVA), and polyvinylpyrrolidone (PVP).

### <Negative Electrode 12>

As the negative electrode current collector 30, for example, a foil of a metal electrochemically and chemically stable within the potential range of the negative electrode 12 or a film having such a metal disposed on its surface layer can be used. The form of the negative electrode current collector 30 is not particularly limited. For example, a porous body of the metal, such as a mesh, a punching sheet, or an expanded metal, may be used. Examples of a material of the negative electrode current collector 30 include Al, Ti, Mg, Zn, Pb, Sn, Zr, and In. These metals may be used singly, or may be used as an alloy or the like of two or more kinds thereof, and the material of the negative electrode current collector 30 is to include at least one such metal as a main component. In the case of including two or more elements, the material is not necessarily required to be alloyed. The negative electrode current collector 30 preferably has a thickness of, for example, 3 µm or more and 50 µm or less from the viewpoints of current collectability, mechanical strength, and the like.

The negative electrode mixture layer 32 includes a negative electrode active material. The negative electrode mixture layer 32 may include a binder, a conductive agent, a thickener, and the like. As the conductive agent and the binder, ones similar to those on the positive electrode 10 side can be used. The negative electrode 12 can be manufactured by, for example, applying a negative electrode mixture slurry including a negative electrode active material, a binder, a conductive agent, and the like to the negative electrode current collector 30, and drying and rolling the applied film to form a negative electrode mixture layer 32 on the negative electrode current collector 30.

Examples of the thickener include cellulose derivatives (for example, cellulose ethers) such as carboxymethyl celluloses (CMCs), modified products thereof (including salts such as Na salts), and methyl cellulose, saponified products of a polymer having a vinyl acetate unit such as polyvinyl alcohol, and polyethers (for example, polyalkylene oxides such as polyethylene oxide). These may be used singly or in combination of two or more kinds thereof.

The negative electrode active material is not particularly limited as long as it is a material that can be used as a negative electrode active material of a conventional lithium ion secondary battery, and examples of the material include carbon materials such as artificial graphite, natural graphite, hard carbon, soft carbon, carbon nanotubes, and activated carbon, metals such as Li, Si, and Sn, alloys and oxides of such metals, and metal compounds such as metal sulfides and metal nitrides. Examples of the Li alloys include a lithium-aluminum alloy, a lithium-tin alloy, a lithium-lead alloy, and a lithium-silicon alloy. Examples of the metal oxides including Li include lithium titanate (such as Li₄Ti₅O₁₂). Examples of the metal nitrides including Li include lithium-cobalt nitrides, lithium-iron nitrides, and lithium-manganese nitrides. Sulfur-based compounds may also be exemplified.

In a lithium ion secondary battery using an aqueous electrolyte and using a carbon material as a negative electrode active material, the influence of a side reaction of water is usually so large that the battery capacity is significantly reduced with a charge-discharge cycle. However, according to the lithium ion secondary battery of the present embodiment, water is prevented from being in contact with the negative electrode as described above, and therefore even if a carbon material is used as the negative electrode active material, capacity reduction associated with a charge-discharge cycle can be suppressed.

### <Aqueous Electrolyte 16>

The aqueous electrolyte 16 includes a lithium salt. The aqueous electrolyte 16 including a lithium salt is, for example, an aqueous liquid electrolyte including a lithium salt and an aqueous solvent, or an aqueous solid electrolyte in which a lithium salt, an aqueous solvent, and a matrix polymer are combined. The aqueous solid electrolyte is obtained by, for example, dissolving a lithium salt in an aqueous solvent, further mixing or dissolving a matrix polymer to obtain a precursor solution, and drying the precursor solution. The aqueous electrolyte 16 may be a liquid or solid, and is preferably an aqueous liquid electrolyte from the viewpoint of further improving the battery characteristics.

The aqueous solvent is a solvent containing water, and may be water alone, or may contain water and a solvent other than water. The content of water based on the total amount of the aqueous solvent is preferably greater than or equal to 50% in terms of volume ratio, for example, from the viewpoints of enhancing the safety of the lithium ion secondary battery 1, and the like.

The amount of water with respect to the lithium salt included in the aqueous electrolyte 16 is such that the molar ratio of the lithium salt to water is preferably less than or equal to 1 : 4, more preferably in the range of greater than or equal to 1 : 0.5 and less than or equal to 1 : 4, and still more preferably in the range of greater than or equal to 1 : 0.5 and less than or equal to 1 : 3 mol. In a case where the amount of water with respect to the lithium salt included in the aqueous electrolyte 16 is within the above range, for example, the potential window of the aqueous electrolyte 16 may be enlarged as compared with the case of the water amount out of the above range, and thus the voltage applied to the lithium ion secondary battery 1 may be further increased.

Examples of the solvent other than water contained in the aqueous solvent include organic solvents such as esters, ethers, nitriles, alcohols, ketones, amines, amides, sulfur compounds, and hydrocarbons. Examples of the solvent other than water may further include halogen-substituted solvents in which at least a part of hydrogen atoms in the above-described solvents are substituted with halogen atoms such as fluorine. Specifically, from the viewpoint of, for example, improving the battery characteristics of the lithium ion secondary battery 1, the solvent other than water is preferably, for example, a cyclic carbonic acid ester such as ethylene carbonate, propylene carbonate, vinylidene carbonate, or butylene carbonate, a chain carbonic acid ester such as dimethyl carbonate, methyl ethyl carbonate, or diethyl carbonate, or a fluorinated carbonic acid ester including fluorine as a constitution element such as fluoroethylene carbonate, fluorodimethyl carbonate, or methyl fluoropropionate. Among the above examples, the cyclic carbonic acid ester and the fluorinated carbonic acid ester including fluorine as a constitution element are particularly preferable, for example, from the viewpoints of suppressing self-discharge of the battery, and the like. Among the fluorinated carbonic acid esters in the above examples, fluoroethylene carbonate is preferable. These organic solvents may be used singly or in combination of two or more kinds thereof.

The amount of the organic solvent with respect to the lithium salt included in the aqueous electrolyte 16 is such that the molar ratio of the lithium salt to the organic solvent is preferably in the range of greater than or equal to 1 : 0 and less than or equal to 1 : 2.5, and more preferably in the range of greater than or equal to 1 : 0 and less than or equal to 1 : 2. In a case where the amount of the organic solvent with respect to the lithium salt is within the above range, the battery characteristics of the lithium ion secondary battery may be improved as compared with the case of the organic solvent amount out of the above range.

As the lithium salt, any compound can be used as long as it can be dissolved and dissociated in an aqueous solvent to provide lithium ions in the aqueous electrolyte 16. Examples of such a lithium salt include salts with an inorganic acid such as perchloric acid, sulfuric acid, or nitric acid, salts with a halide ion such as a chloride ion or a bromide ion, and salts with an organic anion including a carbon atom in its structure.

Examples of the organic anion constituting the lithium salt include anions represented by the following general formulas (i) to (vi).

(R¹SO₂)(R²SO₂)N⁻ (i)

(R¹ and R² are each independently selected from an alkyl group or a halogen-substituted alkyl group. R¹ and R² may be bonded to each other to form a ring.)

R³SO₃⁻ (ii)

(R³ is selected from an alkyl group or a halogen-substituted alkyl group.)

R⁴CO₂⁻ (iii)

(R⁴ is selected from an alkyl group or a halogen-substituted alkyl group.)

(R⁵SO₂)₃C⁻ (iv)

(R⁵ is selected from an alkyl group or a halogen-substituted alkyl group.)

[(R⁶SO₂)N(SO₂)N(R⁷SO₂)]²⁻ (v)

(R⁶ and R⁷ are selected from an alkyl group or a halogen-substituted alkyl group.)

[(R⁸SO₂)N(CO)N(R⁹SO₂)]²⁻ (vi)

(R⁸ and R⁹ are selected from an alkyl group or a halogen-substituted alkyl group.)

In the general formulas (i) to (vi), the number of carbon atoms in the alkyl group or the halogen-substituted alkyl group is preferably 1 to 6, more preferably 1 to 3, and still more preferably 1 to 2. The halogen in the halogen-substituted alkyl group is preferably fluorine. The substitution number of the halogen in the halogen-substituted alkyl group is equal to or smaller than the number of hydrogen atoms in the original alkyl group.

Each of R¹ to R⁹ is, for example, a group represented by the following general formula (vii).

CₙHₐF_{b}Cl_{c}Br_{d}Iₑ (vii)

(n is an integer of greater than or equal to 1, a, b, c, d, and e are integers of greater than or equal to 0, and 2n + 1 = a + b + c + d + e is satisfied.)

Specific examples of the organic anion represented by the general formula (i) include bis(trifluoromethanesulfonyl)imide (TFSI; [N(CF₃SO₂)₂]⁻), bis(perfluoroethanesulfonyl)imide (BETI; [N(C₂F₅SO₂)₂]⁻), and (perfluoroethanesulfonyl)(trifluoromethanesulfonyl)imide ([N(C₂F₅SO₂)(CF₃SO₂)]⁻). Specific examples of the organic anion represented by the general formula (ii) include CF₃SO₃⁻ and C₂F₅SO₃⁻. Specific examples of the organic anion represented by the general formula (iii) include CF₃CO₂⁻ and C₂F₅CO₂⁻. Specific examples of the organic anion represented by the general formula (iv) include tris(trifluoromethanesulfonyl)carbon acid ([(CF₃SO₂)₃C]⁻) and tris(perfluoroethanesulfonyl)carbon acid ([(C₂F₅SO₂)₃C]⁻). Specific examples of the organic anion represented by the general formula (v) include sulfonyl bis(trifluoromethanesulfonyl)imide ([(CF₃SO₂)N(SO₂)N(CF₃SO₂)]²⁻), sulfonyl bis(perfluoroethanesulfonyl)imide ([(C₂F₅SO₂)N(SO₂)N(C₂F₅SO₂)]²⁻), and sulfonyl (perfluoroethanesulfonyl)(trifluoromethanesulfonyl)imide ([(C₂F₅SO₂)N(SO₂)N(CF₃SO₂)]²⁻). Specific examples of the organic anion represented by the general formula (vi) include carbonyl bis(trifluoromethanesulfonyl)imide ([(CF₃SO₂)N(CO)N(CF₃SO₂)]²⁻), carbonyl bis(perfluoroethanesulfonyl)imide ([(C2F5SO2)N(CO)N(C₂F₅SO₂)]²⁻), and carbonyl (perfluoroethanesulfonyl)(trifluoromethanesulfonyl)imide ([(C₂F₅SO₂)N(CO)N(CF₃SO₂)]²⁻).

Examples of organic anions other than the organic anions of the general formulas (i) to (vi) include anions such as bis(1,2-benzenediolate(2-)-O,O')borate, bis(2,3-naphthalenediolate(2-)-O,O')borate, bis(2,2'-biphenyldiolate(2-)-O,O')borate, and bis(5-fluoro-2-olate-1-benzenesulfonate-O,O')borate.

The anion constituting the lithium salt is preferably an imide anion. Specific examples of a preferable imide anion include, in addition to the imide anions exemplified as the organic anions represented by the general formula (i), bis(fluorosulfonyl)imide (FSI; [N(FSO₂)₂]⁻) and (fluorosulfonyl)(trifluoromethanesulfonyl)imide (FTI; [N(FSO₂)(CF₃SO₂)]⁻).

The lithium salt having a lithium ion and an imide anion is, for example, preferably lithium bis(trifluoromethanesulfonyl)imide (LiTFSI), lithium bis(perfluoroethanesulfonyl)imide (LiBETI), lithium (perfluoroethanesulfonyl)(trifluoromethanesulfonyl)imide, lithium bis(fluorosulfonyl)imide (LiFSI), or lithium (fluorosulfonyl)(trifluoromethanesulfonyl)imide (LiFTI), and more preferably lithium bis(trifluoromethanesulfonyl)imide (LiTFSI), from the viewpoint of, for example, effectively suppressing self-discharge of the battery. These lithium salts may be used singly or in combination of two or more kinds thereof.

Specific examples of other lithium salts include CF₃SO₃Li, C₂F₅SO₃Li, CF₃CO₂Li, C₂F₅CO₂Li, (CF₃SO₂)₃CLi, (C₂F₅SO₂)₃CLi, (C₂F₅SO₂)₂(CF₃SO₂)CLi, (C₂F₅SO₂)(CF₃SO₂)₂CLi, [(CF₃SO₂)N(SO₂)N(CF₃SO₂)]Li₂, [(C₂F₅SO₂)N(SO₂)N(C₂F₅SO₂)]Li₂, [(C₂F₅SO₂)N(SO₂)N(CF₃SO₂)]Li₂, [(CF₃SO₂)N(CO)N(CF₃SO₂)]Li₂, [(C₂F₅SO₂)N(CO)N(C₂F₅SO₂)]Li₂, [(C₂F₅SO₂)N(CO)N(CF₃SO₂)]Li₂, lithium bis(1,2-benzenediolate(2-)-O,O')borate, lithium bis(2,3-naphthalenediolate(2-)-O,O')borate, lithium bis(2,2'-biphenyldiolate(2-)-O,O')borate, lithium bis(5-fluoro-2-olate-1-benzenesulfonate-O,0')borate, lithium perchlorate (LiClO₄), lithium chloride (LiCl), lithium bromide (LiBr), lithium hydroxide (LiOH), lithium nitrate (LiNO₃), lithium sulfate (Li₂SO₄), lithium sulfide (Li₂S), and lithium hydroxide (LiOH). These lithium salts may be used singly or in combination of two or more kinds thereof.

The lithium salt included in the aqueous electrolyte 16 preferably contains a lithium ion and an imide anion, and the concentration of the lithium salt in the aqueous electrolyte is preferably greater than or equal to 4.5 mol/L and less than or equal to 6 mol/L, for example, from the viewpoint of improving the battery characteristics of the lithium ion secondary battery.

Examples of the matrix polymer included in a case where the aqueous electrolyte 16 is an aqueous solid electrolyte include polyvinylidene fluoride-hexafluoropropylene (PVDF-HFP), polyacrylonitrile (PAN), polyvinyl alcohol (PVA), polytetrafluoroethylene (PTFE), polyethylene oxide (PEO), and polymethyl methacrylate (PMMA). Examples of the matrix polymer may further include polymers obtained by mixing acrylonitrile and acrylic acid as monomers and thermally polymerizing the mixture.

The content of the matrix polymer is, for example, preferably greater than or equal to 1 mass% and less than or equal to 15.0 mass%, and more preferably greater than or equal to 3 mass% and less than or equal to 10 mass% based on the total amount of the aqueous electrolyte 16. Within the above range, for example, the aqueous electrolyte 16 easily gels or solidifies.

In a case where the aqueous electrolyte 16 is an aqueous solid electrolyte, the aqueous electrolyte 16 may coat the entire positive electrode 10, or may coat at least the positive electrode mixture layer 28. The aqueous solid electrolyte is obtained by, for example, dissolving a lithium salt in an aqueous solvent, further mixing or dissolving a matrix polymer to obtain a precursor solution, applying the precursor solution to the positive electrode 10 or immersing the positive electrode 10 in the precursor solution to coat the positive electrode 10 with the precursor solution, and then drying the resulting product. In a case where the aqueous electrolyte 16 is an aqueous liquid electrolyte, the entire positive electrode 10 may be immersed in the aqueous liquid electrolyte, but it is sufficient that only the positive electrode mixture layer 28 is impregnated with the aqueous liquid electrolyte.

### <Non-Aqueous Electrolyte 18>

The non-aqueous electrolyte 18 includes a lithium salt. The non-aqueous electrolyte 18 including a lithium salt is, for example, a non-aqueous liquid electrolyte including a lithium salt and an organic solvent, or a non-aqueous solid electrolyte in which a lithium salt, an organic solvent, and a matrix polymer are combined. The non-aqueous solid electrolyte is prepared by, for example, dissolving a lithium salt in an organic solvent, further mixing or dissolving a matrix polymer to obtain a precursor solution, and heating and drying the precursor solution. The non-aqueous electrolyte 18 may be a liquid or solid, and is preferably a non-aqueous liquid electrolyte from the viewpoint of further improving the battery characteristics.

Examples of the organic solvent include known organic solvents used in conventional non-aqueous secondary batteries, such as esters, ethers, nitriles, alcohols, ketones, amines, amides, sulfur compounds, and hydrocarbons described above. Among these organic solvents, esters, ethers, nitriles, amides, mixed solvents of two or more thereof, and the like are preferably used from the viewpoint of, for example, improving battery characteristics.

Examples of the esters include cyclic carbonic acid esters such as ethylene carbonate, propylene carbonate, and butylene carbonate, chain carbonic acid esters such as dimethyl carbonate, methyl ethyl carbonate, diethyl carbonate, methyl propyl carbonate, ethyl propyl carbonate, and methyl isopropyl carbonate, and carboxylic acid esters such as methyl acetate, ethyl acetate, propyl acetate, methyl propionate, ethyl propionate, and γ-butyrolactone.

Examples of the ethers include cyclic ethers such as 1,3-dioxolane, 4-methyl-1,3-dioxolane, tetrahydrofuran, 2-methyltetrahydrofuran, propylene oxide, 1,2-butylene oxide, 1,3-dioxane, 1,4-dioxane, 1,3,5-trioxane, furan, 2-methylfuran, 1,8-cineol, and crown ethers, and chain ethers such as 1,2-dimethoxyethane, diethyl ether, dipropyl ether, diisopropyl ether, dibutyl ether, dihexyl ether, ethyl vinyl ether, butyl vinyl ether, methyl phenyl ether, ethyl phenyl ether, butyl phenyl ether, pentyl phenyl ether, methoxytoluene, benzyl ethyl ether, diphenyl ether, dibenzyl ether, o-dimethoxybenzene, 1,2-diethoxyethane, 1,2-dibutoxyethane, diethylene glycol dimethyl ether, diethylene glycol diethyl ether, diethylene glycol dibutyl ether, 1,1-dimethoxymethane, 1,1-diethoxyethane, triethylene glycol dimethyl ether, and tetraethylene glycol dimethyl.

The organic solvent preferably contains a halogen-substituted solvent in which hydrogen in the solvent described above is substituted with a halogen atom such as fluorine. The halogen-substituted solvent is particularly preferably at least one of a fluorinated cyclic carbonic acid ester, a fluorinated chain carbonic acid ester, or a fluorinated ether. Preferred examples of the fluorinated cyclic carbonic acid ester include 4-fluoroethylene carbonate, 4,5-difluoroethylene carbonate, 4,4-difluoroethylene carbonate, 4,4,5-trifluoroethylene carbonate, and 4,4,5,5-tetrafluoroethylene carbonate. Preferred examples of the fluorinated chain carbonic acid ester include ethyl 2,2,2-trifluoroacetate, methyl 3,3,3-trifluoropropionate, and methyl pentafluoropropionate. Preferred examples of the fluorinated ether include 1,1,2,2-tetrafluoroethyl 2,2,2-trifluoroethyl ether and 1,1,2,2-tetrafluoroethyl 2,2,3,3-tetrafluoropropyl ether.

The organic solvent preferably contains a cyclic organic solvent such as a cyclic carbonic acid ester, for example, from the viewpoints of suppressing deterioration of the lithium ion conductivity of the non-aqueous electrolyte 18, and the like.

Examples of the lithium salt include known lithium salts used in conventional non-aqueous secondary batteries, such as LiPF₆, LiBF₄, LiAsF₆, LiClO₄, LiCF₃SO₃, LiN(FSO₂)₂, LiN(ClF₂ₗ₊₁SO₂)(CₘF₂ₘ₊₁SO₂) (l and m are integers of greater than or equal to 1), LiC(CₚF₂ₚ₊₁SO₂)(C_{q}F_{2q+1}SO₂)(CᵣF₂ᵣ₊₁SO₂) (p, q, and r are integers of greater than or equal to 1), Li[B(C₂O₄)₂] (lithium bis(oxalate)borate (LiBOB)), Li[B(C₂O₄)F₂], Li[P(C₂O₄)F₄], Li[P(C₂O₄)₂F₂], and LiPO₂F₂. The lithium salt may be, for example, the above-exemplified lithium salt to be used in the aqueous electrolyte 16.

As the matrix polymer, ones similar to those in the aqueous electrolyte 16 can be used. The content of the matrix polymer is, for example, preferably greater than or equal to 1 mass% and less than or equal to 15.0 mass%, and more preferably greater than or equal to 3 mass% and less than or equal to 10 mass% based on the total amount of the non-aqueous electrolyte 18. Within the above range, for example, the non-aqueous electrolyte 18 easily solidifies.

In a case where the non-aqueous electrolyte 18 is a non-aqueous solid electrolyte, the non-aqueous electrolyte 18 preferably has water repellency so as to have a solubility of less than or equal to 2 g in 100 g of water at 25°C, for example, from the viewpoints of effectively suppressing contact between the negative electrode 12 and water, and the like. The water repellency of the non-aqueous electrolyte 18 can be enhanced by, for example, increasing the ratio of the organic solvent having a water-repellent substituent or the fluorinated organic solvent.

In a case where the non-aqueous electrolyte 18 is a non-aqueous solid electrolyte, it is sufficient that only the surface of the negative electrode mixture layer 32 is coated with the non-aqueous electrolyte 18. However, a side reaction of water occurs also on the negative electrode current collector 30 and the negative electrode lead 22, and therefore it is preferable that the entire negative electrode 12 be coated, and it is more preferable that the negative electrode lead 22 (excluding the portion protruding from the battery case 24) be also coated. The non-aqueous solid electrolyte is obtained by, for example, dissolving a lithium salt in an organic solvent, further mixing or dissolving a matrix polymer to obtain a precursor solution, applying the precursor solution to the negative electrode 12 or immersing the negative electrode 12 to which the negative electrode lead 22 is attached in the precursor solution to coat the negative electrode 12 and the like with the precursor solution, and then drying the resulting product. In a case where the non-aqueous electrolyte 18 is a non-aqueous liquid electrolyte, the negative electrode mixture layer 32 is to be impregnated with the non-aqueous liquid electrolyte.

### <Partition Layer 14>

The partition layer 14 includes a non-aqueous solid electrolyte A in which a matrix polymer and a non-aqueous electrolyte liquid are combined. The matrix polymer includes a copolymer of acrylonitrile and at least one of methyl methacrylate, methyl acrylate, or vinyl acetate. The partition layer 14 has, for example, a function of lithium-ion permeation and electrical separation between the positive electrode 10 and the negative electrode 12. The partition layer 14 of the present embodiment includes the non-aqueous solid electrolyte A to suppress water permeation, and thus movement of water from the positive electrode 10 side to the negative electrode 12 side via the partition layer 14 is suppressed. As a result, a side reaction of water at the negative electrode 12 side is suppressed, and thus capacity reduction associated with a charge-discharge cycle is suppressed.

The non-aqueous electrolyte liquid may be any known non-aqueous electrolyte liquid used in a lithium ion secondary battery, and includes, for example, a lithium salt and a non-aqueous solvent. As the lithium salt and the non-aqueous solvent, for example, the above-described examples for the non-aqueous electrolyte 18 can be used. The non-aqueous electrolyte liquid preferably includes a cyclic organic solvent such as a cyclic carbonic acid ester from the viewpoints of lithium ion conductivity and the like. The organic solvent preferably contains an organic solvent having a water-repellent substituent or a fluorinated organic solvent, for example, from the viewpoint of suppressing water permeability in the partition layer 14.

The matrix polymer is to include a copolymer of acrylonitrile and at least one of methyl methacrylate, methyl acrylate, or vinyl acetate, and is preferably an acrylonitrile-methyl methacrylate copolymer from the viewpoint of densifying the non-aqueous solid electrolyte A to suppress water permeability in the partition layer 14. The content of the matrix polymer is preferably in the range of greater than or equal to 5 mass% and less than or equal to 30 mass%, and more preferably in the range of greater than or equal to 10 mass% and less than or equal to 25 mass% based on the total amount of the non-aqueous solid electrolyte A. Within the above range, for example, the denseness of the non-aqueous solid electrolyte A is improved, and water permeability in the partition layer 14 may be further suppressed.

The non-aqueous solid electrolyte A is obtained, for example, by a phase inversion method. Hereinafter, a production example of the non-aqueous solid electrolyte A by a phase inversion method will be described. First, a solution is obtained in which the matrix polymer is dissolved in an organic solvent. The organic solvent is desirably a solvent in which the matrix polymer is easily dissolved, and examples of the organic solvent include dimethylformamide.

The solution in which the matrix polymer is dissolved is applied to a substrate such as a glass plate or an aluminum foil. Then, a poor solvent (for example, water) is added to the applied film on the substrate to solidify the matrix polymer, and thus a polymer skeleton (that is, polymer film) is formed. Next, the polymer skeleton taken out from the substrate is immersed in a poor solvent for a predetermined time or dried by heat treatment such as vacuum heating.

The obtained polymer skeleton is immersed in a non-aqueous electrolyte liquid for a predetermined time, and heated and dried for a predetermined time. As a result, a membrane of the non-aqueous solid electrolyte A in which the matrix polymer including a polymer skeleton and the non-aqueous electrolyte liquid are combined is obtained. The obtained membrane of the non-aqueous solid electrolyte A is in a gel state or a solid state. The produced membrane of the non-aqueous solid electrolyte A is used as the partition layer 14.

The partition layer 14 including the non-aqueous solid electrolyte A may be produced with a production method other than the production method in which a phase inversion method is used, but the denseness of the non-aqueous solid electrolyte A is improved and water permeability in the partition layer 14 can be suppressed in the production method in which a phase inversion method is used as compared with other methods. In a production method other than the production method in which a phase inversion method is used, for example, a non-aqueous electrolyte liquid and a matrix polymer are mixed or dissolved in an organic solvent to obtain a precursor solution, and the precursor solution is applied to a porous sheet such as a separator and dried. The partition layer 14 is thus formed in which the porous sheet is coated with the non-aqueous solid electrolyte A.

The thickness of the partition layer 14 may be, for example, in the range of greater than or equal to 10 µm and less than or equal to 50 µm, and may be in the range of greater than or equal to 15 µm and less than or equal to 30 µm.

The partition layer 14 is not limited to a partition layer including only the non-aqueous solid electrolyte A, and may include the non-aqueous solid electrolyte A and a non-aqueous solid electrolyte B including a component different from components of the non-aqueous solid electrolyte A. In a case where the non-aqueous solid electrolytes A and B are included, the partition layer 14 may be a single partition layer in which the non-aqueous solid electrolytes A and B are integrated, or a laminated structure in which a first partition layer including the non-aqueous solid electrolyte A and a second partition layer including the non-aqueous solid electrolyte B are layered.

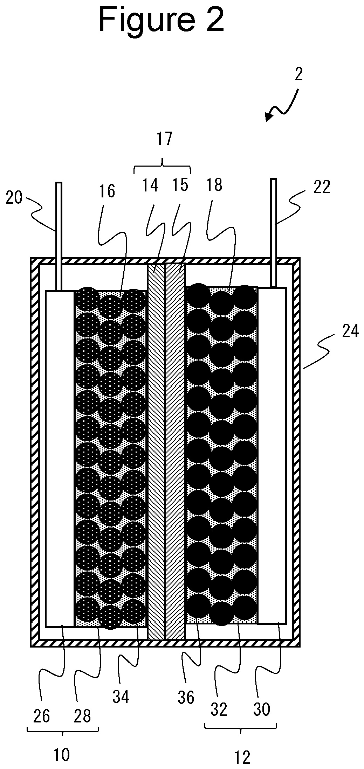

FIG. 2 is a schematic sectional view showing another example of the lithium ion secondary battery of the present embodiment. In a lithium ion secondary battery 2 shown in FIG. 2, a constituent similar to that of the lithium ion secondary battery 1 shown in FIG. 1 is denoted by the same reference sign as in FIG. 1. The lithium ion secondary battery 2 shown in FIG. 2 includes a partition layer 17 including a first partition layer 14 and a second partition layer 15 between a positive electrode 10 and a negative electrode 12. The first partition layer 14 is a partition layer including the non-aqueous solid electrolyte A, and is similar to the partition layer 14 shown in FIG. 1. The second partition layer 15 is a partition layer including the non-aqueous solid electrolyte B including a component different from components of the non-aqueous solid electrolyte A.

The second partition layer 15 is obtained, for example, by applying a precursor solution of the non-aqueous solid electrolyte B to a porous sheet such as a separator and drying the applied solution. As the precursor solution of the non-aqueous solid electrolyte B, the precursor solution described above for the non-aqueous electrolyte 18 can be used. Specific examples of the porous sheet include fine porous thin films, woven fabrics, and nonwoven fabrics. Examples of the material of the porous sheet include olefin-based resins such as polyethylene and polypropylene, resins such as polyamides, polyamideimides, and cellulose, and glass and ceramics such as borosilicate glass, silica, alumina, and titania. The porous sheet may be a laminate including a cellulose fiber layer and a thermoplastic resin fiber layer such as an olefin-based resin. The porous sheet may be a laminate including a polyethylene layer and a polypropylene layer, and a porous sheet may be used that has a surface to which a material such as an aramid-based resin or a ceramic is applied.

The matrix polymer in the precursor solution of the non-aqueous solid electrolyte B, that is, the matrix polymer included in the non-aqueous solid electrolyte B preferably includes a fluorine-based matrix polymer, and preferably includes polyvinylidene fluoride (PVDF), for example, from the viewpoint of suppressing water permeability in the second partition layer 15.

The non-aqueous solid electrolyte B includes an organic solvent. As the organic solvent included in the non-aqueous solid electrolyte B, the above-described examples for the non-aqueous electrolyte 18 can be used. The non-aqueous solid electrolyte B preferably includes a cyclic organic solvent such as a cyclic carbonic acid ester, for example, from the viewpoints of suppressing deterioration of the lithium ion conductivity, and the like. The cyclic organic solvent is preferably included in an amount of greater than or equal to 30 vol%, more preferably greater than or equal to 50 vol%, and still more preferably greater than or equal to 80 vol% based on the total volume of the organic solvent in the non-aqueous solid electrolyte B.

In the lithium ion secondary battery 2 shown in FIG. 2, the first partition layer 14 including the non-aqueous solid electrolyte A is disposed on the positive electrode 10 side, and the second partition layer 15 including the non-aqueous solid electrolyte B is disposed on the negative electrode 12 side. The disposition of the partition layers is not limited to the above-described disposition, and the first partition layer 14 including the non-aqueous solid electrolyte A may be disposed on the negative electrode 12 side, and the second partition layer 15 including the non-aqueous solid electrolyte B may be disposed on the positive electrode 10 side.

The thickness of the first partition layer 14 may be, for example, in the range of greater than or equal to 10 µm and less than or equal to 50 µm, and may be in the range of greater than or equal to 15 µm and less than or equal to 30 µm.The thickness of the second partition layer 15 may be, for example, in the range of greater than or equal to 10 µm and less than or equal to 50 µm, and may be in the range of greater than or equal to 15 µm and less than or equal to 30 µm. If the first partition layer 14 and the second partition layer 15 are too thick, for example, the battery resistance may increase and the battery performance may deteriorate. If the first partition layer 14 and the second partition layer 15 are too thin, for example, the mechanical strength may be reduced.

The partition layer 17 in which the first partition layer 14 including the non-aqueous solid electrolyte A and the second partition layer 15 including the non-aqueous solid electrolyte B are layered can be produced, for example, by immersing a polymer skeleton produced with a phase inversion method in a non-aqueous electrolyte liquid to produce the non-aqueous solid electrolyte A, then placing the non-aqueous solid electrolyte A on the non-aqueous solid electrolyte B, and heating (drying) the non-aqueous solid electrolyte A. The single partition layer in which the non-aqueous solid electrolytes A and B are integrated can be produced, for example, in immersing a polymer skeleton produced with a phase inversion method in a non-aqueous electrolyte liquid to produce the non-aqueous solid electrolyte A, by adding a precursor solution of the non-aqueous solid electrolyte B to the non-aqueous electrolyte liquid or immersing the produced non-aqueous solid electrolyte A in the precursor solution of the non-aqueous solid electrolyte B.

Examples of the battery case 24 include metal cases, resin cases, and laminate film cases. Examples of a material of the metal cases include nickel, iron, and stainless steel. Examples of a material of the resin cases include polyethylene and polypropylene. The laminate film is, for example, a multilayer film in which a stainless foil is coated with a resin film. Examples of a material of the resin film include polypropylene, polyethylene, nylon, and polyethylene terephthalate.

The lithium ion secondary battery of the present embodiment is used in various forms having a shape such as a square, cylindrical, flat, thin, coin, or laminate shape.

### EXAMPLES

Hereinafter, the present disclosure will be further described with reference to Examples, but the present disclosure is not limited to these Examples.

### <Example 1>

### [Negative Electrode]

Graphite as a negative electrode active material, SBR as a binder, and a CMC as a thickener were mixed at a solid-content mass ratio of 98 : 1 : 1, and water was added to prepare a negative electrode mixture slurry. Next, the negative electrode mixture slurry was applied to a negative electrode current collector made of a copper foil, and the applied film was dried and then rolled with a roller. The resulting product was cut into a predetermined electrode size to obtain a negative electrode. The amount of the applied negative electrode mixture slurry was 128 g/m², and the packing density of the negative electrode mixture layer was 1.7 gcm⁻³.

### [Positive Electrode]

LiNi_{0.82}Co_{0.15}Al_{0.03}O₂ as a positive electrode active material, carbon black as a conductive agent, and PVDF as a binder were mixed at a mass ratio of 98 : 1 : 1, and N-methyl-2-pyrrolidone (NMP) was added to prepare a positive electrode mixture slurry. Next, the positive electrode mixture slurry was applied to a positive electrode current collector made of a Ti foil, and the applied film was dried and then rolled with a roller. The resulting product was cut into a predetermined electrode size to obtain a positive electrode. The amount of the applied positive electrode mixture slurry was 234 g/cm², and the packing density of the positive electrode mixture layer was 3.7 gcm⁻³.

### [Non-Aqueous Liquid Electrolyte]

In a mixed solution obtained by mixing fluoroethylene carbonate (FEC) and methyl 3,3,3-trifluoropropionate (FMP) at a volume ratio of 30 : 70, 1 M LiTFSI was dissolved to prepare a non-aqueous liquid electrolyte.

### [Aqueous Liquid Electrolyte]

LiTFSI, LiBETI, and water were mixed at a molar ratio of 0.7 : 0.3 : 2.0 to prepare an aqueous liquid electrolyte in which the LiTFSI and the LiBETI were dissolved in the water.

### [First Partition Layer]

To a dimethylformamide (DMF) solvent, an acrylonitrile-methyl methacrylate copolymer as a matrix polymer was added in an amount of 10 mass%, and the resulting solution was stirred at 85°C until the matrix polymer was completely dissolved. This solution was applied in a thickness of 25 µm to a glass plate, and water was added dropwise on the solution to solidify the matrix polymer, and thus a polymer skeleton having a porous structure was obtained. The polymer skeleton was peeled off from the glass plate and immersed in water for 10 minutes, and then the polymer skeleton was dried in a vacuum at 100°C overnight.

In a mixed solvent obtained by mixing fluoroethylene carbonate (FEC) and methyl 3,3,3-trifluoropropionate (FMP) at a volume ratio of 90 : 10, 1 M LiTFSI was dissolved to prepare a non-aqueous electrolyte liquid. The dried polymer skeleton was immersed in the non-aqueous electrolyte liquid for 60 seconds. Thereafter, the excess liquid attached to the polymer skeleton was wiped off, and the polymer skeleton was dried with a dryer at 80°C for 20 minutes to obtain a gel non-aqueous solid electrolyte membrane. This membrane was used as a first partition layer.

### [Second Partition Layer]

In a mixed solution obtained by mixing fluoroethylene carbonate (FEC) and methyl 3,3,3-trifluoropropionate (FMP) at a volume ratio of 9 : 1, 1 M LiTFSI was dissolved to prepare an electrolyte liquid. Next, with respect to the electrolyte liquid, 4 mass% of polymethyl methacrylate (PMMA) and 8 mass% of polyvinylidene fluoride-hexafluoropropylene (PVDF-HFP) were prepared and dissolved in a solvent obtained by mixing tetrahydrofuran (THF) in an amount 10 times that of PMMA and acetone in an amount 10 times that of PMMA. The electrolyte liquid was mixed with the resulting solution to prepare a precursor solution of a non-aqueous solid electrolyte. Then, a porous sheet was immersed in the precursor solution of a non-aqueous solid electrolyte, and then dried at 60°C for 1 hour to obtain a porous sheet coated with the non-aqueous solid electrolyte. This sheet was used as a second partition layer.

### [Test Cell]

The negative electrode to which a negative electrode lead was attached was immersed in the non-aqueous liquid electrolyte to obtain the negative electrode impregnated with the non-aqueous liquid electrolyte. The positive electrode to which a positive electrode lead was attached was immersed in the aqueous liquid electrolyte to obtain the positive electrode impregnated with the aqueous liquid electrolyte. An electrode assembly in which the first partition layer was disposed between the negative electrode and the positive electrode was housed in a battery case as shown in FIG. 1 to produce a test cell.

### <Example 2>

A test cell was produced in the same manner as in Example 1 except that an electrode assembly was used in which the first partition layer was disposed on the positive electrode side and the second partition layer was disposed on the negative electrode side between the negative electrode impregnated with the non-aqueous liquid electrolyte and the positive electrode impregnated with the aqueous liquid electrolyte.

### <Comparative Example 1>

A test cell was produced in the same manner as in Example 1 except that an electrode assembly was used in which no partition layer was disposed between the negative electrode impregnated with the non-aqueous liquid electrolyte and the positive electrode impregnated with the aqueous liquid electrolyte.

### <Comparative Example 2>

A test cell was produced in the same manner as in Example 1 except that an electrode assembly was used in which the second partition layer was disposed between the negative electrode impregnated with the non-aqueous liquid electrolyte and the positive electrode impregnated with the aqueous liquid electrolyte.

### [Charge-Discharge Cycle Test]

The test cell of each of Examples and Comparative Examples was charged at a constant current of 0.05 C to 4.2 V, and rested for 20 minutes. Then, the test cell was discharged at a constant current of 0.05 C to 2.5 V and rested for 20 minutes. This charge-discharge cycle was repeated 10 times, and the capacity maintenance rate was determined with the following formula. 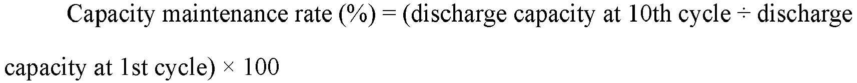 Capacity maintenance rate (%) = (discharge capacity at 10th cycle ÷ discharge capacity at 1st cycle) × 100

Table 1 summarizes the discharge capacity at the 10th cycle and the capacity maintenance rate calculated with the above formula in each of Examples and Comparative Examples. In Table 1, the discharge capacity of Example 2 is converted to 100 (used as a reference), and the discharge capacities of other Examples and Comparative Examples are shown as relative values. A higher capacity maintenance rate value in Table 1 indicates larger suppression of capacity reduction associated with the charge-discharge cycles.

**[Table 1]**

| | Partition layer | Discharge capacity | Capacity maintenance rate |
|---|---|---|---|
| Example 1 | First partition layer | 82 | 53% |
| Example 2 | First partition layer + second partition layer | 100 | 66% |
| Comparative Example 1 | Absent | 0 | 0% |
| Comparative Example 2 | Second partition layer | 33 | 29% |

In Examples 1 and 2, both the discharge capacity value and the capacity maintenance rate value were higher than in Comparative Examples 1 and 2. From this result, it can be said that according to Examples 1 and 2 in which a non-aqueous solid electrolyte including an acrylonitrile-methyl methacrylate copolymer was used as the partition layer, it was possible to suppress capacity reduction associated with a charge-discharge cycle of a lithium ion secondary battery in which an aqueous electrolyte was used.

### REFERENCE SIGNS LIST

- 1, 2: Lithium ion secondary battery
- 10: Positive electrode
- 12: Negative electrode
- 14: Partition layer or first partition layer
- 15: Second partition layer
- 16: Aqueous electrolyte
- 17: Partition layer
- 18: Non-aqueous electrolyte
- 20: Positive electrode lead
- 22: Negative electrode lead
- 24: Battery case
- 26: Positive electrode current collector
- 28: Positive electrode mixture layer
- 30: Negative electrode current collector
- 32: Negative electrode mixture layer
- 34: Positive electrode active material
- 36: Negative electrode active material

## Claims

1. A lithium ion secondary battery (1, 2) comprising: a negative electrode (12); a positive electrode (10); a non-aqueous electrolyte including a lithium salt; an aqueous electrolyte including a lithium salt; and a partition layer (17) disposed between the negative electrode (12) and the positive electrode (10),
the aqueous electrolyte being in contact with only the positive electrode (10) between the negative electrode (12) and the positive electrode (10),
the non-aqueous electrolyte being in contact with at least the negative electrode (12) between the negative electrode (12) and the positive electrode (10),
the partition layer (17) including a non-aqueous solid electrolyte A in which a matrix polymer and a non-aqueous electrolyte liquid are combined,
the matrix polymer including a copolymer of acrylonitrile and at least one of methyl methacrylate, methyl acrylate, or vinyl acetate.

2. The lithium ion secondary battery (1, 2) according to claim 1, wherein the matrix polymer is an acrylonitrile-methyl methacrylate copolymer.

3. The lithium ion secondary battery (1, 2) according to claim 1 or 2, wherein the partition layer (17) includes a non-aqueous solid electrolyte B including a component different from components of the non-aqueous solid electrolyte A.

4. The lithium ion secondary battery (1, 2) according to claim 3, wherein the partition layer (17) is a laminated structure in which a first partition layer (14) including the non-aqueous solid electrolyte A and a second partition layer (15) including the non-aqueous solid electrolyte B are layered.

5. The lithium ion secondary battery (1, 2) according to claim 3 or 4, wherein the non-aqueous solid electrolyte B includes a fluorine-based matrix polymer.

6. The lithium ion secondary battery (1, 2) according to claim 5, wherein the fluorine-based matrix polymer contains polyvinylidene fluoride (PVDF).

7. The lithium ion secondary battery (1, 2) according to claim 5 or 6, wherein the non-aqueous solid electrolyte B includes an organic solvent containing a cyclic organic solvent, and the organic solvent contains greater than or equal to 50 vol% of the cyclic organic solvent based on a total volume of the organic solvent.

## Patentansprüche

1. Lithium-Ionen-Sekundärbatterie (1, 2), umfassend: eine negative Elektrode (12); eine positive Elektrode (10); einen nichtwässrigen Elektrolyten, der ein Lithiumsalz enthält; einen wässrigen Elektrolyten, der ein Lithiumsalz enthält; und eine Trennschicht (17), die zwischen der negativen Elektrode (12) und der positiven Elektrode (10) angeordnet ist,
wobei der wässrige Elektrolyt zwischen der negativen Elektrode (12) und der positiven Elektrode (10) nur mit der positiven Elektrode (10) in Kontakt ist,
wobei der nichtwässrige Elektrolyt zwischen der negativen Elektrode (12) und der positiven Elektrode (10) mit mindestens der negativen Elektrode (12) in Kontakt ist,
wobei die Trennschicht (17) einen nichtwässrigen Festelektrolyten A umfasst, in dem ein Matrixpolymer und eine nichtwässrige Elektrolytflüssigkeit kombiniert sind,
wobei das Matrixpolymer ein Copolymer aus Acrylnitril und mindestens einem von Methylmethacrylat, Methylacrylat oder Vinylacetat umfasst.

2. Lithium-Ionen-Sekundärbatterie (1, 2) nach Anspruch 1, wobei das Matrixpolymer ein Acrylnitril-Methylmethacrylat-Copolymer ist.

3. Lithium-Ionen-Sekundärbatterie (1, 2) nach Anspruch 1 oder 2, wobei die Trennschicht (17) einen nichtwässrigen Festelektrolyten B umfasst, der eine Komponente umfasst, die sich von Komponenten des nichtwässrigen Festelektrolyten A unterscheidet.

4. Lithium-Ionen-Sekundärbatterie (1, 2) nach Anspruch 3, wobei die Trennschicht (17) eine laminierte Struktur ist, in der eine erste Trennschicht (14), die den nichtwässrigen Festelektrolyten A umfasst, und eine zweite Trennschicht (15), die den nichtwässrigen Festelektrolyten B umfasst, geschichtet sind.

5. Lithium-Ionen-Sekundärbatterie (1, 2) nach Anspruch 3 oder 4, wobei der nichtwässrige Festelektrolyt B ein fluorbasiertes Matrixpolymer umfasst.

6. Lithium-Ionen-Sekundärbatterie (1, 2) nach Anspruch 5, wobei das fluorbasierte Matrixpolymer Polyvinylidenfluorid (PVDF) enthält.

7. Lithium-Ionen-Sekundärbatterie (1, 2) nach Anspruch 5 oder 6, wobei der nichtwässrige Festelektrolyt B ein organisches Lösungsmittel umfasst, das ein cyclisches organisches Lösungsmittel enthält, und das cyclische organische Lösungsmittel in einem Anteil von mindestens 50 Vol.-%, bezogen auf das Gesamtvolumen des organischen Lösungsmittels, enthalten ist.

## Revendications

1. Batterie secondaire au lithium-ion (1, 2) comprenant : une électrode négative (12) ; une électrode positive (10) ; un électrolyte non aqueux comprenant un sel de lithium ; un électrolyte aqueux comprenant un sel de lithium ; et une couche de séparation (17) disposée entre l'électrode négative (12) et l'électrode positive (10),
l'électrolyte aqueux étant en contact avec uniquement l'électrode positive (10) entre l'électrode négative (12) et l'électrode positive (10),
l'électrolyte non aqueux étant en contact avec au moins l'électrode négative (12) entre l'électrode négative (12) et l'électrode positive (10),
la couche de séparation (17) comprenant un électrolyte solide non aqueux A dans lequel un polymère matriciel et un électrolyte liquide non aqueux sont combinés,
le polymère matriciel comprenant un copolymère d'acrylonitrile et d'au moins un monomère parmi le méthacrylate de méthyle, l'acrylate de méthyle ou l'acétate de vinyle.

2. Batterie secondaire au lithium-ion (1, 2) selon la revendication 1, dans laquelle le polymère matriciel est un copolymère acrylonitrile-méthacrylate de méthyle.

3. Batterie secondaire au lithium-ion (1, 2) selon la revendication 1 ou 2, dans laquelle la couche de séparation (17) comprend un électrolyte solide non aqueux B comprenant un composant différent des composants de l'électrolyte solide non aqueux A.

4. Batterie secondaire au lithium-ion (1, 2) selon la revendication 3, dans laquelle la couche de séparation (17) est une structure stratifiée dans laquelle une première couche de séparation (14) comprenant l'électrolyte solide non aqueux A et une deuxième couche de séparation (15) comprenant l'électrolyte solide non aqueux B sont superposées.

5. Batterie secondaire au lithium-ion (1, 2) selon la revendication 3 ou 4, dans laquelle l'électrolyte solide non aqueux B comprend un polymère matriciel à base de fluor.

6. Batterie secondaire au lithium-ion (1, 2) selon la revendication 5, dans laquelle le polymère matriciel à base de fluor contient du fluorure de polyvinylidène (PVDF).

7. Batterie secondaire au lithium-ion (1, 2) selon la revendication 5 ou 6, dans laquelle l'électrolyte solide non aqueux B comprend un solvant organique contenant un solvant organique cyclique, et le solvant organique contient le solvant organique cyclique en une quantité supérieure ou égale à 50 % en volume, sur la base du volume total du solvant organique.
